# EUROPÄISCHE PATENTANMELDUNG

(11) **EP 1 557 734 A2**
(43) Veröffentlichungstag der Anmeldung: **27.07.2005**
(21) Anmeldenummer: 05000539.6
(22) Anmeldetag: 12.01.2005
(51) Int. Cl.: G05G 1/14

(54) **Stellglied, Hydraulikvorrichtung und Doppelpedalvorrichtung mit diesem Stellglied**

(30) Priorität: 12.01.2004 DE 202004000334 U
(71) Anmelder: Pilz, Karlheinz, 81247 München (DE)
(72) Erfinder: Pilz, Karlheinz, 81247 München (DE)
(74) Vertreter: Seitz, Ralf, Dipl.-Ing.

(57) **Zusammenfassung**

Die vorliegende Erfindung betrifft ein Stellglied (20; 22), insbesondere zum Eingriff in ein Pedal (23, 24, 25) eines Kraftfahrzeugs, mit einer hydraulischen Druckzylindereinrichtung (22.1, 22.2, 22.3, 22.4), einem Gleiter (22.6) und einer Führung für den Gleiter (22.6), der mit der Druckzylindereinrichtung zum Übertragen einer Bewegung zwischen der Druckzylindereinrichtung und dem Gleiter gekoppelt ist, wobei die Führung eine Profilschiene (22.5) hat, entlang der der Gleiter (22.6) mittels einer Führungssteg/Führungsnut-Einrichtung (2.1, 2.2) beweglich gelagert ist, und eine Hydraulikeinrichtung und eine Doppelpedalvorrichtung für ein Fahrschulfahrzeug mit diesem Stellglied.

## Beschreibung

Die vorliegende Erfindung betrifft ein Stellglied gemäß dem Oberbegriff von Anspruch 1, eine Hydraulikvorrichtung und eine Doppelpedalvorrichtung mit diesem Stellglied, insbesondere zur Verwendung in einem Fahrschulfahrzeug.

In der WO 02/25394 A1 wird eine Doppelpedalvorrichtung mit einem Stellglied zur Verwendung in einem Fahrschulfahrzeug beschrieben. Das bekannte Stellglied hat einen Schlitten oder Gleiter, der mit einem Pedal gekoppelt ist, und eine Druckzylindereinrichtung, die mit dem Gleiter koppelbar ist. Der Gleiter besteht aus einem Kunststoffblock mit durchgehenden Bohrungen, in denen sich Führungsstäbe erstrecken. Um eine genaue Führung des Gleiters auf den Stäben zu ermöglichen, müssen sowohl die Stäbe als auch die Führungsbohrungen des Gleiters sehr genau hergestellt werden, wodurch ein hoher Fertigungsaufwand erforderlich ist. Zudem kann es zu einer erhöhten Reibung im Stellglied oder sogar zu einer Behinderung der Stellgliedbewegung aufgrund der unterschiedlichen Wärmeausdehnungskoeffizienten von Gleiter und Stäben kommen, insbesondere wenn man den großen, typischen Temperaturbereich zwischen - 40 °C und + 40 °C im Automobilbau betrachtet, in dem die Funktion eines Automobils sichergestellt werden muss.

Aufgabe der vorliegenden Erfindung ist es deshalb, ein aufwandsparendes Stellglied z.B. für eine Doppelpedalvorrichtung eines Fahrschulfahrzeugs anzugeben, das eine Fehlfunktion aufgrund unterschiedlicher Wärmeausdehnung seiner Komponenten vermeidet.

Diese Aufgabe wird durch das Stellglied gemäß Anspruch 1, die Hydraulikvorrichtung gemäß Anspruch 9 oder die Doppelpedalvorrichtung gemäß Anspruch 10 gelöst. Demnach hat das Stellglied der Erfindung, insbesondere zum Eingriff in ein Pedal eines Kraftfahrzeugs, eine hydraulische Druckzylindereinrichtung, einen Gleiter oder Schlitten und einer Führung für den Gleiter, der mit der Druckzylindereinrichtung zum Übertragen einer Bewegung zwischen der Druckzylindereinrichtung und dem Gleiter gekoppelt ist, wobei die Führung eine Profilschiene hat, entlang der der Gleiter mittels einer Führungssteg/Führungsnut-Einrichtung beweglich gelagert ist.

Das Stellglied der Erfindung hat den Vorteil, das es die problembehafteten Bohrungen des Stands der Technik nicht mehr hat und somit trotz Sicherstellung einer genauen Führung des Gleiters die besagten Probleme aufgrund Fertigungsaufwand und Wärmeausdehnung in der vorliegenden Erfindung vermieden werden. Die Verwendung einer Profilschiene als Führungsschiene hat zudem noch den Vorteil einer großen Biegesteifigkeit und überhaupt einer verbesserten Festigkeit gegenüber der Verwendung von Stäben oder Rohren im Stand der Technik.

Die Führungssteg/Führungsnut-Einrichtung hat bevorzugt einen Führungssteg, der an der Profilschiene ausgebildet ist, und eine zugehörige bzw. entsprechende Führungsnut, die an dem Gleiter ausgebildet ist, wobei der Führungssteg in die Führungsnut eingreift. Die Führungssteg/Führungsnut-Einrichtung kann aber auch einen Führungssteg, der an dem Gleiter ausgebildet ist, und eine Führungsnut haben, die an der Profilschiene ausgebildet ist, wobei der Führungssteg in die Führungsnut eingreift. Bevorzugt sind mindestens zwei solche Führungssteg/Führungsnut-Einrichtungen mit Abstand zueinander vorgesehen.

Die Führungsnut kann z.B. direkt im Gleitermaterial oder in der Profilschiene ausgebildet sein. Bevorzugt ist die Führungsnut jedoch als Lagerschalennut in einer Lagerschale ausgebildet, die wiederum in einer Nut in dem Gleiter oder der Profilschiene angeordnet ist.

Das Stellglied kann eine Lagerschale haben, die in einer Nut der Profilschiene oder des Gleiters angeordnet ist und eine Lagerschalennut als Führungsnut hat, in die der Führungssteg der Führungssteg/Führungsnut-Einrichtung eingreift.

Die Lagerschale des Stellglieds kann Polyoxymethylen, Polyformaldehyd, Polyacetal (POM) oder Teflon enthalten.

Das Stellglied der Erfindung kann ein Zugmittel haben, das mit dem Gleiter zum Übertragen der Bewegung des Gleiters auf das Zugmittel bzw. der Bewegung des Zugmittels auf den Gleiter gekoppelt ist. Als Zugmittel kann ein Riemen oder Flachriemen verwendet werden. Weiterhin kann das Stellglied eine Führung zum Führen des Zugmittels bzw. des Riemens haben.

Bevorzugt hat das Stellglied der Erfindung eine Signalerzeugungseinrichtung, die ein Signal erzeugt, wenn der Gleiter seine Ruhestellung an der Profilschiene verlässt. Das Signal kann ein akustisches Signal ist.

Der Gleiter des Stellglieds kann einen Mitnehmer oder ein Anschlagteil haben, der bzw. das an dem Gleiter befestigt ist und bei Bewegung des Gleiters an dem Kolben der Zylinder/Kolben-Einheit bzw. an den Kolben der Zylinder/KolbenEinheiten anschlägt.

Das Stellglied der Erfindung kann eine Rückstellfedereinrichtung haben, die derart wirkt, dass der bewegliche Gleiter des Stellglieds in eine Ruhestellung des Gleiters zurückgestellt wird.

Mindestens zwei Führungssteg/Führungsnut-Einrichtungen mit Abstand zueinander können im Stellglied der Erfindung vorgesehen sein.

Das Stellglied kann derart ausgebildet sein, dass eine fiktive Mittenachse einer Profilschiene des Stellglieds und eine fiktive Mittenachse einer weiteren Profilschiene des Stellglieds parallel zueinander und in der gleichen Ebene sind.

Die Hydraulik- oder Pneumatikvorrichtung der Erfindung hat mindestens ein Stellglied der Erfindung, das eine Druckzylindereinrichtung hat, mindestens eine Leitung, die an einem Ende mit der Druckzylindereinrichtung fluiddurchgängig gekoppelt ist, und mindestens eine weitere Druckzylindereinrichtung, die mit einem anderen Ende der Leitung fluiddurchgängig gekoppelt ist. Die Hydraulik- oder Pneumatikvorrichtung der Erfindung kann auch ein weiteres Stellglied der Erfindung haben, das die weitere Druckzylindereinrichtung enthält.

Die Doppelpedalvorrichtung der Erfindung für ein Fahrschulfahrzeug hat mindestens ein fahrerseitiges Pedal, das in der Regel von einem Fahrschüler bei einer Fahrstunde betätigt wird, mindestens ein beifahrerseitiges Pedal, das in der Regel von einem Fahrlehrer während der Fahrstunde betätigt wird, und eine Hydraulik- oder Pneumatikvorrichtung, die das fahrerseitige Pedal mit dem beifahrerseitigen Pedal derart koppelt, dass bei Betätigung des beifahrerseitigen Pedals auch das fahrerseitige Pedal betätigt wird, wobei ein Stellglied der Erfindung mit dem fahrerseitigen Pedal gekoppelt ist und ein weiteres Stellglied der Erfindung mit dem beifahrerseitigen Pedal gekoppelt ist.

Die Doppelpedalvorrichtung der Erfindung hat bevorzugt einen Stützhebel, der mit einem Ende mit dem Gleiter des Stellglieds und mit seinem anderen Ende mit einem Pedalhebel des beifahrerseitigen Pedals gelenkig gekoppelt ist.

Die Doppelpedalvorrichtung der Erfindung hat bevorzugt einen Pedalhebel des fahrerseitigen Pedals, der an einer beweglichen Profilschiene des Stellglieds befestigt ist.

Weitere vorteilhafte Weiterbildungen der vorliegenden Erfindung sind den Unteransprüchen zu entnehmen.

Weitere Vorteile, vorteilhafte Weiterbildungen und Anwendungsmöglichkeiten der vorliegenden Erfindung sind aus der nachfolgenden Beschreibung von bevorzugten Ausführungsformen der Erfindung in Verbindung mit der beiliegenden Zeichnung ersichtlich. Es zeigen:
- Fig. 1: eine perspektivische Ansicht einer fahrerseitigen Pedalanlage einer bevorzugten Doppelpedalvorrichtung der Erfindung, wobei die beiden Pedalanlagen gemäß Fig. 1 und Fig. 6 an den gedachten Schnittstellen A, B und C miteinander durch Druckleitungen verbunden sind;
- Fig. 2: eine Ansicht der fahrerseitigen Pedalanlage von Fig. 1 in Richtung des Pfeils II in Fig. 4 gesehen;
- Fig. 3: eine Ansicht der fahrerseitigen Pedalanlage von Fig. 1 in Richtung des Pfeils III in Fig. 2 gesehen;
- Fig. 4: eine Ansicht der fahrerseitigen Pedalanlage von Fig. 1 in Richtung des Pfeils IV in Fig. 2 gesehen;
- Fig. 5: eine Ansicht der fahrerseitigen Pedalanlage von Fig. 1 in Richtung des Pfeils V in Fig. 2 gesehen;
- Fig. 6: eine perspektivische Ansicht der beifahrerseitigen Pedalanlage der Doppelpedalvorrichtung der Erfindung, wobei die beiden Pedalanlagen gemäß Fig. 1 und Fig. 6 an den Schnittstellen A, B und C miteinander durch Druckleitungen verbunden sind;
- Fig. 7: eine Ansicht der beifahrerseitigen Pedalanlage von Fig. 6 in Richtung des Pfeils VII in Fig. 8 gesehen;
- Fig. 8: eine Ansicht der beifahrerseitigen Pedalanlage von Fig. 6 in Richtung des Pfeils VIII in Fig. 7 gesehen;
- Fig. 9: eine Ansicht der beifahrerseitigen Pedalanlage von Fig. 6 in Richtung des Pfeils IX in Fig. 7 gesehen,
- Fig. 10: eine perspektivische Ansicht einer Profilschiene zur Verwendung in den Stellgliedern der Erfindung;
- Fig. 11: eine teilweise Schnittansicht der Profilschiene von Fig. 10 mit einem daran beweglich gelagerten Gleiter zur Verwendung in einem Stellglied der Erfindung; und
- Fig. 12: eine schematische Ansicht, teilweise im Querschnitt, eines Stellglieds gemäß einer bevorzugten Ausführungsform der Erfindung.

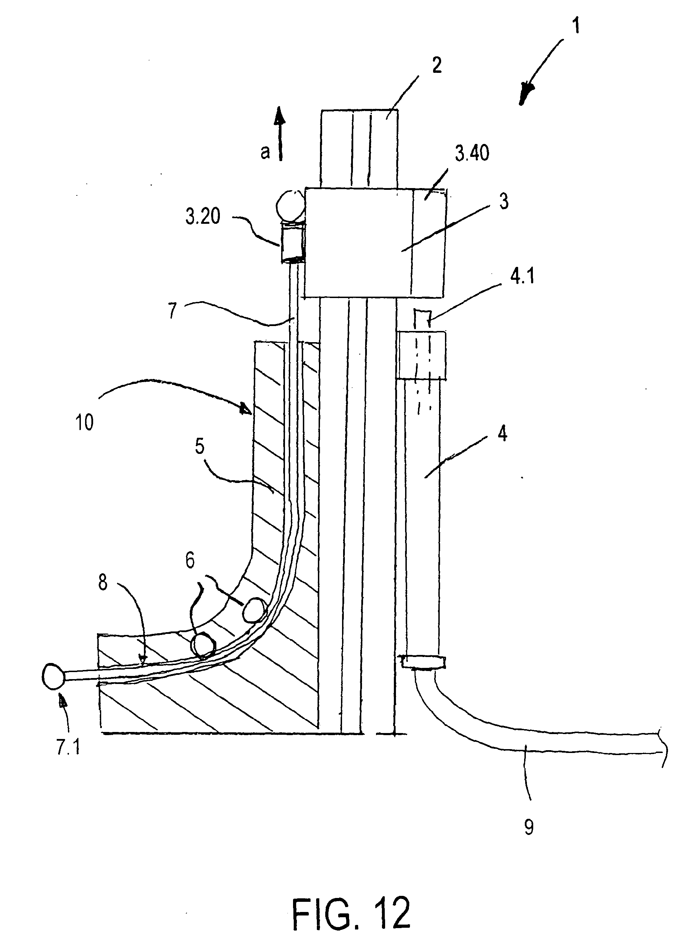

In Fig. 12 ist schematisch und teilweise im Querschnitt ein Stellglied 1 einer ersten Ausführungsform der Erfindung gezeigt. Das Stellglied 1 hat eine langgestreckte, gerade Profilschiene 2, einen Gleiter 3, der an der Profilschiene 2 beweglich gelagert ist, einen Druckzylinder 4 mit darin beweglich gelagertem Kolben 4.1 als hydraulische Druckzylindereinrichtung, einen Riemen 7, z.B. einen Flachriemen und eine Umlenkeinrichtung 10, die den Riemen um 90° umlenkt.

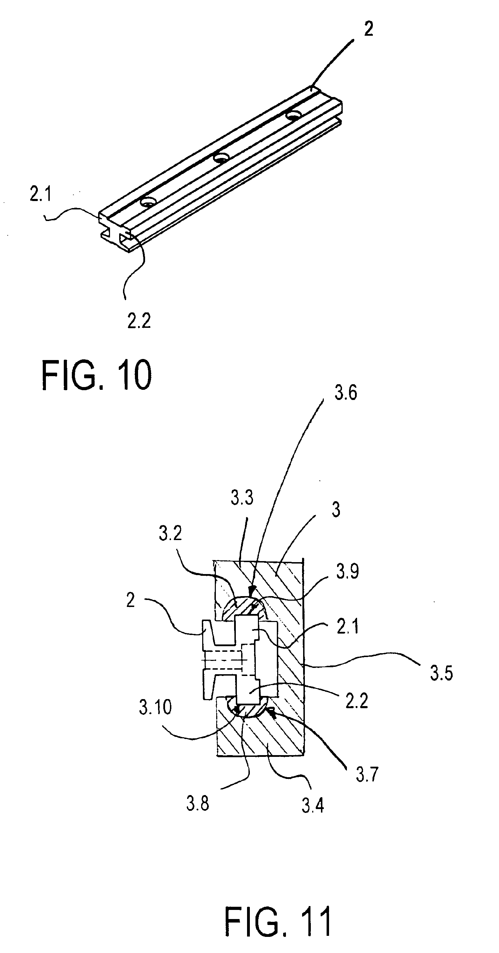

Die Profilschiene 2 hat z.B. den in Fig. 10 und Fig. 11 gezeigten Aufbau, der einen stark profilierten Querschnitt hat und der zwei parallel zueinander, sich in Längsrichtung der Profilschiene 2 erstreckende Führungsstege 2.1 und 2.2 aufweist, die im wesentlichen einen rechteckigen oder quadratischen Querschnitt haben. Die Profilschiene 2 ist z.B. eine harteloxierte Aluminiumprofilschiene.

An der Profilschiene 2 ist der Gleiter 3 bzw. Schlitten in Längsrichtung der Profilschiene 2 beweglich an der Profilschiene 2 gelagert. Der Gleiter 3 hat einen klammerartigen Querschnitt mit einem ersten Schenkel 3.3 und einem zweiten Schenkel 3.4, die sich parallel und mit Abstand zueinander erstrecken und senkrecht von einem Mittenteil 3.5 abstehen. In dem Schenkel 3.3 ist an der freiliegenden Innenseite eine durchgehende Nut 3.6 ausgespart während in dem Schenkel 3.4 an dessen freiliegenden Innenseite eine durchgehende Nut 3.7 ausgespart ist, wobei beide Nuten 3.6 und 3.7 jeweils einen halbkreisförmigen Querschnitt haben und wobei die Nuten 3.6 und 3.7 an den Innenseiten der Schenkel 3.3 und 3.4 gegenüberliegen. In die Nut 3.6 ist eine Lagerschale 3.2 eingesetzt, während gegenüberliegend in die Nut 3.7 des Schenkels 3.4 eine weitere Lagerschale 3.8 eingesetzt ist, die identisch zu der Lagerschale 3.8 aufgebaut ist. Die Lagerschale 3.2 hat an der Innenseite des Schenkels eine freiliegende, durchgehende Lagerschalennut 3.9 als Führungsnut, die einen rechteckigen Querschnitt hat. Auch die Lagerschale 3.8 hat an der Innenseite des Schenkels 3.4 eine freiliegende Lagerschalennut 3.10 als Führungsnut, die einen rechteckigen Querschnitt hat, der an den Umriss bzw. an die freiliegenden Führungsflächen des Führungsstegs 2.1 bzw. des Führungsstegs 2.2 formmäßig angepasst ist. Bei auf die Profilschiene 2 aufgesetztem Gleiter 3, wie in der Fig. 10 gezeigt ist, greift der Führungssteg 2.1 in die Lagerschalennut 3.9 ein, während der Führungssteg 2.2 in die Lagerschalennut 3.10 eingreift, um eine geführte Bewegung des Gleiters 3 an der Profilschiene 2 zu ermöglichen. Die Lagerschalen 3.2 und 3.4 bestehen z.B. aus Kunststoff, insbesondere POM, Polyoxymethylen, Polyformaldehyd bzw. Polyacetal, oder Teflon. Der Gleiter 3 ist z.B. ein Zinkdruckgussteil.

An dem Gleiter 3 ist ein Anschlagteil 3.40 per Schrauben befestigt, während auf der anderen Seite der Profilschiene 2 der Riemen 7 mittels einer Klemme 3.20 an dem Gleiter 3 befestigt ist. Die Umlenkeinrichtung 10 hat ein massives Teil 5 bzw. einen Rahmen oder Träger, in dem ein Kanal 8 ausgebildet ist, in dem sich der Riemen 7 erstreckt. Der Kanal 8 ist um 90 ° gekrümmt, wodurch der Riemen 7 in dem Kanal 8 um 90° umgelenkt wird. In der Wand des Kanals 8 im Krümmungsbereich sind Umlenkrollen 6 angeordnet, die etwas in den Kanal 8 hineinstehen und an denen der Riemen 7 geführt ist, wodurch eine reibungsarme Umlenkung des Riemens 7 ermöglicht wird. An dem Teil 5 ist die Profilschiene 2 befestigt, an der wiederum der Druckzylinder 4 der Druckzylindereinrichtung angebracht ist.

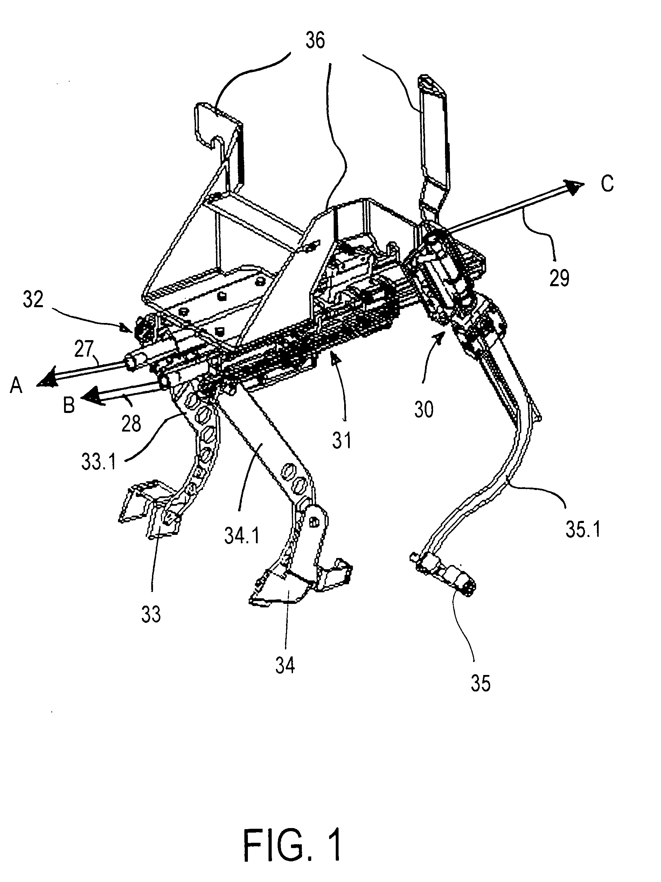

Wird Druck auf den Druckzylinder 4 gegeben, fährt der Kolben 4.1 aus und schlägt an dem Anschlagteil 3.40 an, wodurch der Gleiter 3 in Richtung des Pfeils a in Fig. 1 auf der Profilschiene 2 bewegt wird und der Riemen 7 auch in Richtung des Pfeils a von dem Gleiter 3 gezogen wird. Wird dagegen an dem freien Ende 7.1 des Riemens 7 gezogen, wird der Gleiter auf der Profilschiene 2 entgegengesetzt zu Richtung des Pfeils a bewegt, wodurch das Anschlagteil 3.40 den Kolben 4.1 in den Druckzylinder 4 drückt.

Das Stellglied 1 kann mit dem freien Ende 7.1 des Riemens 7 z.B. mit einem Pedal oder Pedalhebel einer Doppelpedalvorrichtung der Erfindung gekoppelt sein. Ferner kann das Stellglied 1 Bestandteil einer Hydraulikvorrichtung der Erfindung sein, wobei eine Druckzylindereinrichtung der Hydraulikvorrichtung dem Druckzylinder 4 mit Kolben 4.1 entspricht.

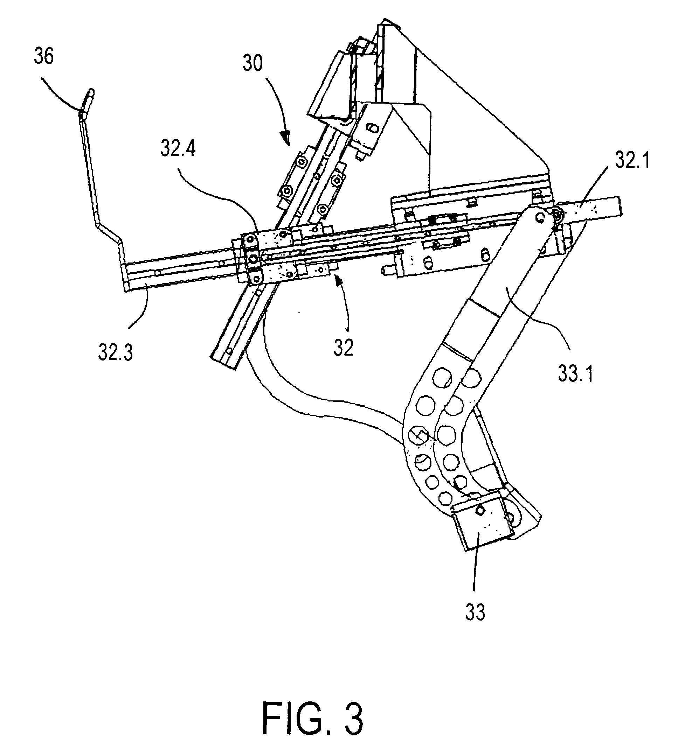

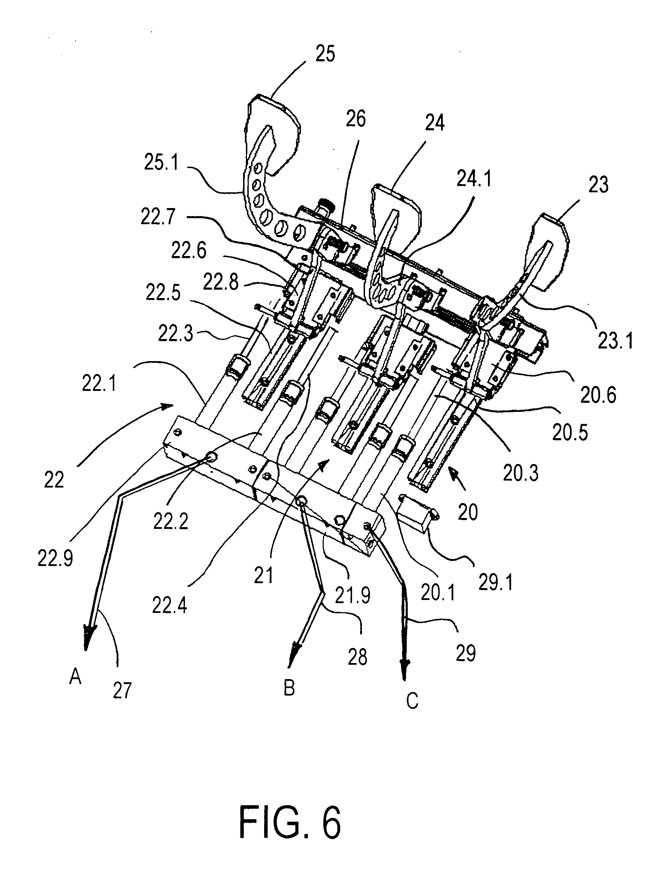

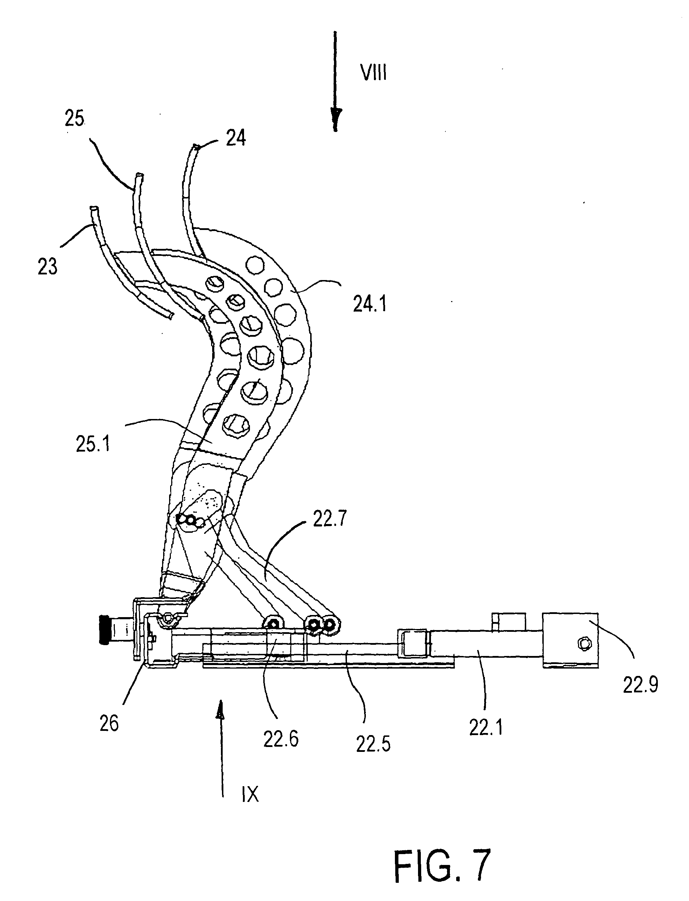

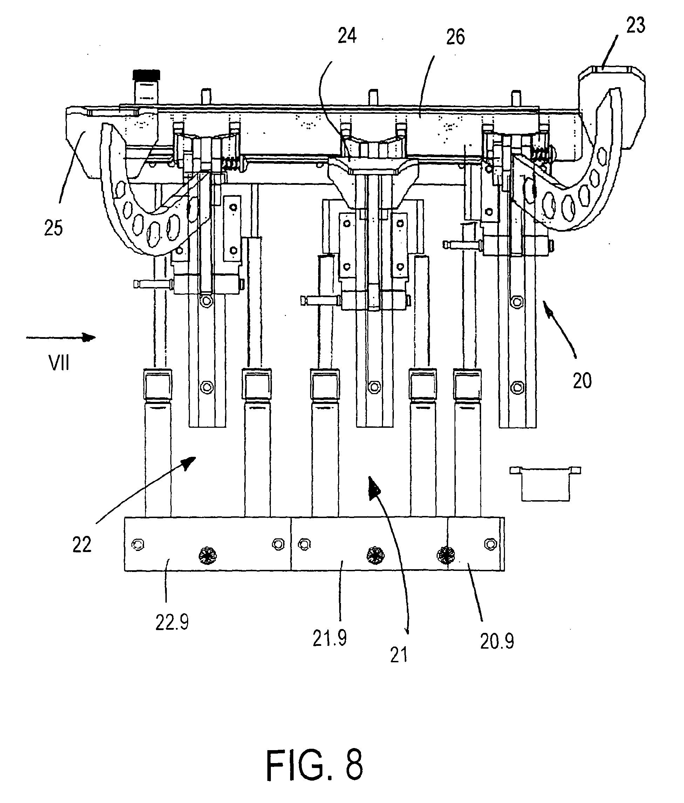

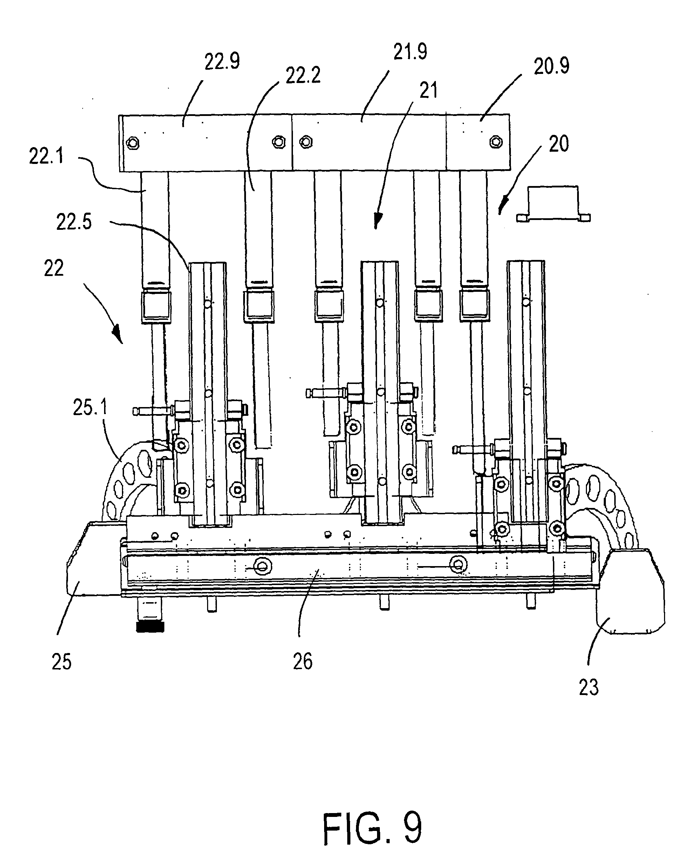

Die Fig. 1 bis 9 zeigen eine Doppelpedalvorrichtung gemäß einer bevorzugten Ausführungsform der Erfindung, wobei in Fig. 6 bis 9 die beifahrerseitige Pedalanlage der Doppelpedalvorrichtung und in Fig. 1 bis 5 die fahrerseitige Pedalanlage der Doppelpedalvorrichtung der Erfindung in unterschiedlichen Ansichten gezeigt sind.

Die beifahrerseitige Pedalanlage der Doppelpedalvorrichtung wird in der Regel vom Fahrlehrer betätigt und hat ein Kupplungspedal 25 oder Antigaspedal, ein Bremspedal 24 und ein Gaspedal 23, ein Stellglied 22 gemäß einer zweiten Ausführungsform der Erfindung, das in Eingriff mit einem Pedalhebel 25.1 des Pedals 25 ist, ein Stellglied 21, das dem Stellglied 22 entspricht und das mit einem Pedalhebel 24.1 des Pedals 24 gekoppelt ist, und ein Stellglied 20 gemäß einer dritten Ausführungsform der Erfindung, das mit einem Pedalhebel 23.1 des Pedals 23 gekoppelt ist. Die in Fig. 6 gezeigte beifahrerseitige Pedalanlage ist auf einer nicht gezeigten Platte montiert und im Fußraum des Beifahrers bzw. Fahrlehrers an der Fußraumdecke angebracht, d.h. die Pedale stehen nach unten in Richtung zum Karosserieboden von der Fußraumdecke ab. Die Pedalhebel 23.1, 24.1 und 25.1 sind mit einem Endrahmen 26 der beifahrerseitigen Pedalanlage schwenkbar gelenkig gekoppelt und mit Rückstellfedern zum Rückstellen des jeweiligen Pedalhebels und seines zugehörigen Pedals in seine unausgelenkte Ruheposition gekoppelt, wie sie in Fig. 6 gezeigt ist.

Das Stellglied 22 umfasst eine Druckzylindereinrichtung mit zwei mit Abstand und parallel zueinander angeordneten Hydraulikdruckzylindern 22.1, 22.2 mit identischem Aufbau und zugehörigen Druckkolbenstangen 22.3 bzw. 22.4, eine Profilschiene 22.5, die den in Fig. 10 gezeigten Aufbau hat, einen mehrteiligen Gleiter 22.6 bzw. Schlitten, der an der Profilschiene 22.5 hin- und her bewegbar gelagert ist, wie in Fig. 11 gezeigt ist, und einen Stützhebel 22.7, der an dem Pedalhebel 25.1 und an dem Gleiter 22.6 jeweils gelenkig angebracht ist und somit den Gleiter 22.6 mit dem Pedalhebel 25.1 koppelt, damit eine Bewegung des Pedalhebels 25.1 über den Stützhebel 22.7 auf den Gleiter 22.6 übertragen werden kann. Eine Bewegung des Gleiters 22.6 auf der Profilschiene 22.5 wird direkt auf die Druckkolbenstangen 22.3 und 22.4 umgesetzt, an deren freien Enden der Gleiter 22.6 mit seinen beidseitig vorgesehenen Anschlagteilen 22.8 bei der Bewegung anschlägt.

Die beiden Druckzylinder 22.1 und 22.2 erstrecken sich parallel zueinander, wobei ihre Symmetrieachsen in der gleichen Ebene liegen, und sind in einem Hydraulikblock 22.9 der Druckzylindereinrichtung des Stellglieds 22 z.B. durch entsprechende Verschraubungen befestigt. Die Ausgänge der beiden Druckzylinder 22.1 und 22.2 sind über einen Kanal im Hydraulikblock 22.9 zu einem Ausgang des Hydraulikblocks 22.9 zusammengefasst, der mit einer Druckleitung 27 fluiddurchgängig gekoppelt ist.

Das Stellglied 21 ist wie das vorstehend beschriebene Stellglied 22 aufgebaut, wobei ein Hydraulikblock 21.9 der Druckzylindereinrichtung des Stellglieds 21 mit einer Druckleitung 28 fluiddurchgängig gekoppelt ist.

Das Stellglied 20 hat eine Druckzylindereinrichtung, die im Unterschied zu der Druckzylindereinrichtung des Stellglieds 22 nur einen Hydraulikzylinder 20.1 mit einem Kolben 20.3 hat. der Aufbau des zugehörigen Gleiters 20.6 an der Profilschiene 20.6 ist wie beim Stellglied 22, mit der Ausnahme, dass am Gleiter nur ein Anschlagteil auf der Seite des Druckzylinders 20.1 angebracht ist. Das Stellglied 20 hat auch einen Hydraulikblock 20.9, der ausgangsseitig mit einer Druckleitung 29 fluidgängig gekoppelt ist

Die Pedalanlage auf der Beifahrerseite hat weiterhin eine Signalerzeugungseinrichtung 29.1, die über einen Lautsprecher ein akustisches Signal ausgibt, wenn eines der Pedale 23, 24 oder 25 auf der Beifahrerseite betätigt wird, also einer der Gleiter der Stellglieder 20, 21 oder 22 aus seiner Ruheposition herausbewegt wird.

Gemäß Fig. 1 bis Fig. 5 umfasst die Pedalanlage auf der Fahrerseite bzw. Fahrschülerseite ein Gaspedal 35, ein Bremspedal 34 und ein Kupplungspedal 33, das bei Fahrzeugen mit Automatikgetriebe entfällt, ein Stellglied 32 gemäß einer vierten Ausführungsform der Erfindung, das mit einem Pedalhebel 33.1 des Pedals 33 gekoppelt ist, ein weiteres Stellglied 31, das vom Aufbau her dem Stellglied 32 entspricht und mit einem Pedalhebel 34.1 des Pedals 34 gekoppelt ist, und ein Stellglied 30 gemäß einer fünften Ausführungsform der Erfindung, das mit einem Pedalhebel 35.1 des Pedals 35 gekoppelt ist.

Eine Halterung 36 ist vorgesehen, an der die Stellglieder 32, 33 und 34 mit Pedalen befestigt sind und die wiederum im Fußraum an der Fußraumdecke derart befestigt ist, dass sich die Pedale von der Fußraumdecke nach unten in Richtung des Karosseriebodens erstrecken.

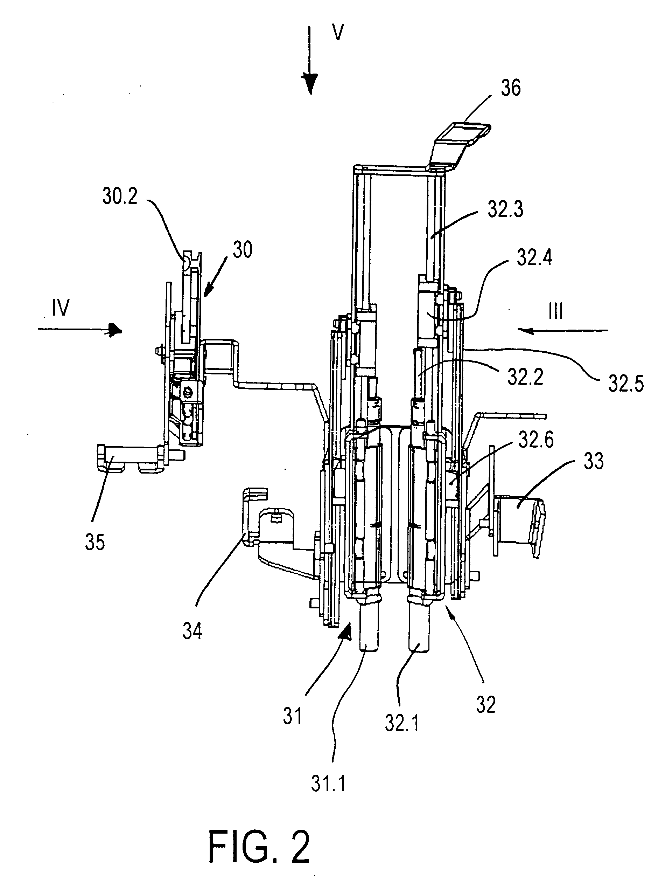

Wie in Fig. 2 gezeigt ist, hat das Stellglied 32 eine Druckzylindereinrichtung mit einem Hydraulikzylindern 32.1 und einer zugehörigen Druckkolbenstangen 32.2, eine erste, feststehende Profilschiene 32.3, die den in Fig. 10 gezeigten Aufbau hat und an der Halterung 36 befestigt ist, einen mehrteiligen, ersten Gleiter 32.4, der an der Profilschiene 32.3 hin- und her bewegbar gelagert und geführt ist, wie in Fig. 11 gezeigt ist, eine zweite, bewegliche Profilschiene 32.5, die den in Fig. 10 gezeigten Aufbau hat und an einem Ende mit dem ersten Gleiter 32.4 gekoppelt ist und an dem anderen Ende mit dem Ende des Pedalhebels 33.1 gekoppelt ist, und einen mehrteiligen, zweiten Gleiter 32.6 oder Führungsschuh, der feststeht und an der Halterung 36 befestigt ist. Die zweite Profilschiene 32.5 hat den gleichen Aufbau wie die in Fig. 10 gezeigte Profilschiene 2 und ist in dem feststehende, zweiten Gleiter 32.6 hin und her bewegbar gelagert, wobei der zweite Gleiter 32.6 wiederum den Aufbau des in Fig. 11 gezeigten Gleiters 3 hat. Die Profilschienen 32.3 und 32.5 sind parallel zueinander angeordnet. Der erste Gleiter 32.4 an der ersten Profilschiene 32.3 und der Kolben 32.2 des Hydraulikzylinders 32.1 können durch gegenseitiges Anschlagen bewegt werden. Der Hydraulikzylinder 32.1 ist mit der Druckleitung 27 fluiddurchgängig gekoppelt.

Das Stellglied 31 ist wie das vorstehend beschriebene Stellglied 32 aufgebaut, wobei ein Hydraulikzylinder 31.1 der Druckzylindereinrichtung des Stellglieds 31 mit der Druckleitung 28 fluiddurchgängig gekoppelt ist.

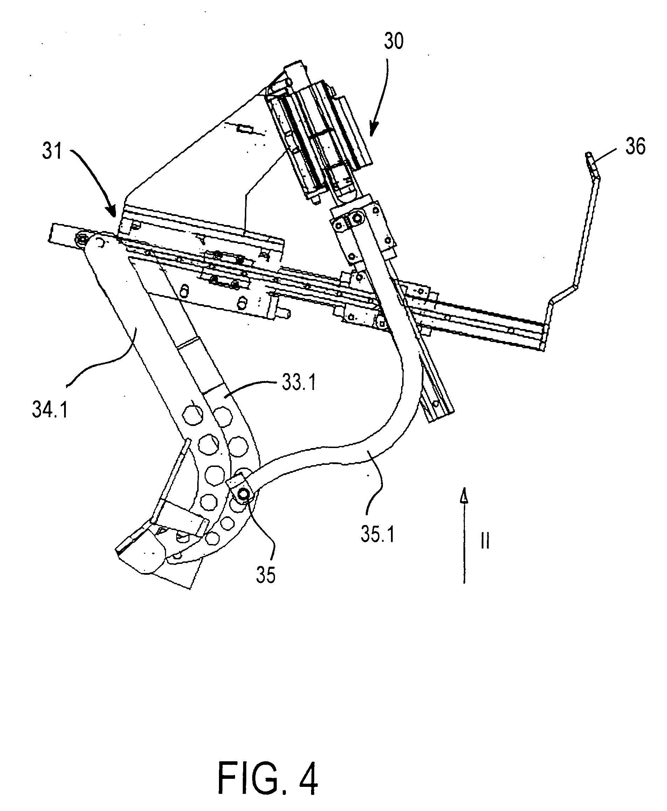

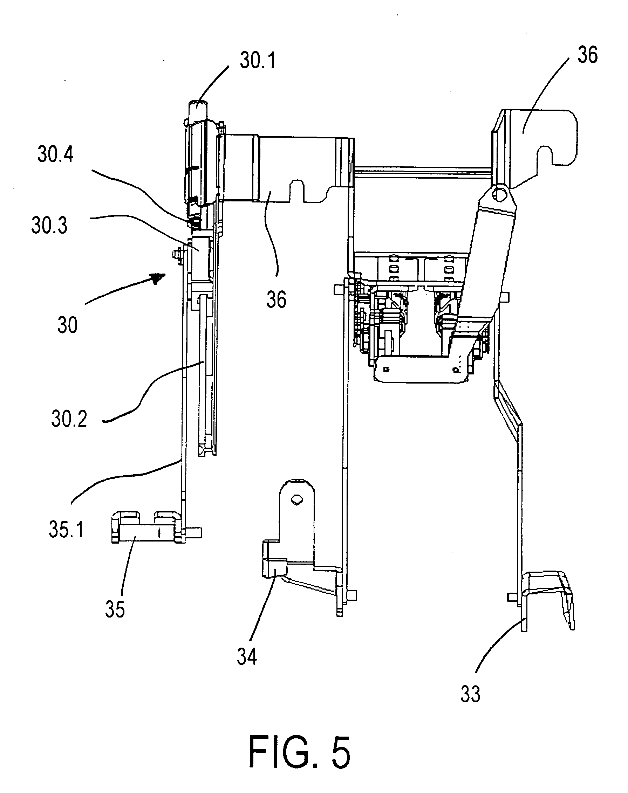

Das Stellglied 30, vgl. insbesondere Fig. 4 und Fig. 5, hat eine Druckzylindereinrichtung mit einem Hydraulikzylinder 30.1 mit zugehörigem Kolben, eine feststehende Profilschiene 30.2, die den in Fig. 10 gezeigten Aufbau hat und an der Halterung 36 befestigt ist, und einen mehrteiligen Gleiter 30.3, der an der Profilschiene 30.2 hin- und her bewegbar gelagert und geführt ist, wie in Fig. 11 gezeigt ist, und an dem der Pedalhebel 35.1 mit einem Ende befestigt ist. Der Hydraulikzylinder 30.1 des Stellglieds 30 ist mit der Druckleitung 29 gekoppelt.

Bei Betätigung z.B. des Pedals 25 auf der Fahrlehrerseite wird der Gleiter 22.6 des Stellglieds 22 in Richtung zum Hydraulikblock 22.9 auf der Profilschiene 22.5 verschoben, wobei die Kolbenstangen 22.3 und 22.4 Druck auf die Flüssigkeitssäule in den Hydraulikzylindern 22.1 und 22.2 ausüben. Dieser Druck wird innerhalb der Flüssigkeitssäule aus dem Hydraulikblock 22.9 in die Druckleitung 27 übertragen und schließlich in den Hydraulikzylinder 32.1 des Stellglieds 32 eingekoppelt. Die Druckkolbenstange 32.2 bewegt daraufhin den ersten Gleiter 32.4 auf der ersten Profilschiene 32.3. Durch die Bewegung des ersten Gleiters 32.4 wird auch die bewegliche, zweite Profilschiene 32.5 des Stellglieds 32 auf der Fahrerseite bewegt, die in dem zweiten, feststehenden Gleiter 32.6 geführt wird. Da die zweite Profilschiene 32.5 mit dem Pedalhebel 33.1 des Pedals 33 gekoppelt ist, wird das Pedal 33 ausgelenkt und die Kupplung des Fahrzeugs betätigt.

Ähnlich wie bei der vorstehend erläuterten Betätigung des Pedals 25 wird bei Betätigung des Pedals 24 auf der Beifahrerseite über das Stellglied 21, die Druckleitung 28 und das Stellglied 31 auf der Fahrerseite das Pedal 34 ausgelenkt und damit die Bremsanlage des Fahrzeugs von der Beifahrerseite aus betätigt.

Bei Betätigung des Pedals 23 auf der Fahrlehrerseite wird der Gleiter 20.6 des Stellglieds 20 in Richtung zum Hydraulikblock 20.9 auf der Profilschiene 20.5 verschoben, wobei die Kolbenstange 20.3 Druck auf die Flüssigkeitssäule in den Hydraulikzylindern 20.1 ausübt. Dieser Druck wird innerhalb der Flüssigkeitssäule aus dem Hydraulikblock 20.9 in die Druckleitung 29 übertragen und schließlich in den Hydraulikzylinder 30.1 des Stellglieds 30 auf der Fahrerseite eingekoppelt. Die Druckkolbenstange 30.4 bewegt daraufhin den Gleiter 30.3 auf der Profilschiene 30.2 des Stellglieds 30. Da der Gleiter 30.3 mit dem Pedalhebel 35.1 des Pedals 35 auf der Fahrerseite gekoppelt ist, wird das Pedal 35 ausgelenkt und Gas gegeben.

Die Hydraulikvorrichtung der Erfindung kann z.B. eine Druckleitung, eine Druckzylindereinrichtung, die mit einem Ende der Druckleitung gekoppelt ist, und ein Stellglied haben, das mit dem anderen Ende der Druckleitung gekoppelt ist. Das Stellglied kann z.B. eines der Stellglieder 22, 21, 20, 30, 31, 32 oder 1 sein. Die Hydraulikvorrichtung kann auch ein weiteres, zweites Stellglied haben, das z.B. durch die Druckzylindereinrichtung selbst gegeben ist oder wiederum durch eines der Stellglieder 22, 21, 20, 30, 31, 32 oder 1 gegeben sein, in dem die Druckzylindereinrichtung eingebaut ist. Als Druckzylindereinrichtung kann z.B. die Druckzylindereinrichtung des vorstehend beschriebenen Stellglieds 22, die die beiden Hydraulikzylinder 22.1 und 22.2 mit den zugehörigen Hydraulikkolben 22.3 bzw. 22.4 und den Hydraulikblock 22.9 aufweist, oder die Druckzylindereinrichtung des Stellglieds 20 verwendet werden, die den einzelnen Hydraulikzylinder 20.1 mit zugehörigem Hydraulikkolben 20.3 und den Hydraulikblock 20.9 aufweist.

## Patentansprüche

1. Stellglied (1; 20; 22, 30; 32), insbesondere zum Eingriff in ein Pedal (23, 24, 25, 33, 34, 35) eines Kraftfahrzeugs, mit einer hydraulischen Druckzylindereinrichtung (22.1, 22.2, 22.3, 22.4), einem Gleiter (3; 22.6) und einer Führung für den Gleiter (3; 22.6), der mit der Druckzylindereinrichtung zum Übertragen einer Bewegung zwischen der Druckzylindereinrichtung und dem Gleiter gekoppelt ist,
**dadurch gekennzeichnet,**
**dass** die Führung eine Profilschiene (2; 22.5) hat, entlang der der Gleiter (3; 22.6) mittels einer Führungssteg/Führungsnut-Einrichtung (2.1, 2.2, 3.9, 3.10) beweglich gelagert ist.

2. Stellglied nach Anspruch 1, **dadurch gekennzeichnet, dass** die Führungssteg/Führungsnut-Einrichtung (2.1, 2.2, 3.9, 3.10) einen Führungssteg (2.1, 2.2), der an der Profilschiene (2; 22.6) ausgebildet ist, und eine Führungsnut(3.9, 3.10) hat, die an dem Gleiter (2; 22.6) ausgebildet ist, wobei der Führungssteg (2.1, 2.2) in die Führungsnut (3.9, 3.10) eingreift, oder dass die Führungssteg/Führungsnut-Einrichtung einen Führungssteg, der an dem Gleiter ausgebildet ist, und eine Führungsnut hat, die an der Profilschiene ausgebildet ist, wobei der Führungssteg in die Führungsnut eingreift.

3. Stellglied nach einem der vorstehenden Ansprüche, **gekennzeichnet durch** ein Zugmittel, das mit dem Gleiter (3) zum Übertragen der Bewegung des Gleiters (3) auf das Zugmittel bzw. der Bewegung des Zugmittels auf den Gleiter (3) gekoppelt ist.

4. Stellglied nach Anspruch 3, **gekennzeichnet durch** eine Führung (5, 6, 8) für einen Riemen oder das Zugmittel, die mindestens eine Führungsrolle (6) zum Umlenken des Zugmittels oder Riemens (7) hat, wobei die Umlenkung insbesondere 90° oder 180° betragen kann.

5. Stellglied nach einem der vorstehenden Ansprüche, **gekennzeichnet durch** eine Lagerschale (3.2), die in einer Nut (3.6) der Profilschiene oder des Gleiters (3) angeordnet ist und eine Lagerschalennut (3.9) als Führungsnut hat, in die der Führungssteg (2.1) der Führungssteg/Führungsnut-Einrichtung eingreift.

6. Stellglied nach einem der vorstehenden Ansprüche, **gekennzeichnet durch** eine befestigte, feststehende Halterung (36), die Profilschiene (32.3), die an der Halterung (36) befestigt ist, den Gleiter (32.4), der an der Profilschiene (32.3) beweglich gelagert ist, einen weiteren, zweiten Gleiter (32.6), der an der Halterung (36) befestigt ist, und eine weitere, zweite Profilschiene (32.5), die in dem weiteren Gleiter (32.6) beweglich gelagert ist und mit dem beweglichen Gleiter (32.4) derart gekoppelt ist, dass eine Bewegung der weiteren Profilschiene (32.5) über den beweglichen Gleiter (32.4) auf die Druckzylindereinrichtung oder eine Bewegung der Druckzylindereinrichtung über den beweglichen Gleiter (32.4) auf die weitere Profilschiene (32.5) übertragen wird.

7. Stellglied nach einem der vorstehenden Ansprüche, **dadurch gekennzeichnet, dass** die Druckzylindereinrichtung eine Druckzylinder/Kolben-Einheit (20.1, 20.3) hat, deren Kolben (20.3) auf Anschlag mit dem beweglichen Gleiter (20.6) gekoppelt ist, oder dass die Druckzylindereinrichtung mindestens zwei Druckzylinder/Kolben-Einheiten (22.1, 22.2, 22.3, 22.4) hat, deren Kolben (22.3, 22.4) sich parallel zueinander erstrecken, deren Symmetrieachsen in der gleichen Ebene sind und die auf Anschlag mit dem beweglichen Gleiter (22.6) gekoppelt sind.

8. Stellglied nach Anspruch 7, **dadurch gekennzeichnet, dass** der Gleiter (22.6) einen Mitnehmer oder ein Anschlagteil (22.8) hat, der bzw. das an dem Gleiter (22.6) befestigt ist und bei Bewegung des Gleiters (22.6) an dem Kolben der Zylinder/Kolben-Einheit bzw. an den Kolben (22.3, 22.4) der Zylinder/Kolben-Einheiten anschlägt.

9. Hydraulik- oder Pneumatikvorrichtung, die mindestens ein Stellglied (20, 21, 22; 30, 31, 32; 1) nach einem der Ansprüche 1 bis 8, das eine Druckzylindereinrichtung hat, mindestens eine Druckleitung (27, 28, 29), die an einem Ende mit der Druckzylindereinrichtung fluiddurchgängig gekoppelt ist, und mindestens eine weitere Druckzylindereinrichtung aufweist, die mit einem anderen Ende der Druckleitung (27, 28, 29) fluiddurchgängig gekoppelt ist.

10. Doppelpedalvorrichtung für ein Fahrschulfahrzeug mit mindestens einem fahrerseitigen Pedal (33, 34, 35), mindestens einem beifahrerseitigen Pedal (23, 24, 25) und einer Hydraulik- oder Pneumatikvorrichtung gemäß Anspruch 9, die das fahrerseitige Pedal mit dem beifahrerseitigen Pedal derart koppelt, dass bei Betätigung des beifahrerseitigen Pedals auch das fahrerseitige Pedal betätigt wird, wobei ein Stellglied (30, 31, 32; 1) gemäß einem der Ansprüche 1 bis 8 mit dem fahrerseitigen Pedal (33, 34, 35) gekoppelt ist und ein weiteres Stellglied (20, 21, 22, 1) gemäß einem der Ansprüche 1 bis 8 mit dem beifahrerseitigen Pedal (23, 24, 25) gekoppelt ist.
